# EUROPÄISCHE PATENTSCHRIFT

(11) **EP 2 467 912 B1**
(45) Veröffentlichungstag und Bekanntmachung des Hinweises auf die Patenterteilung: **06.07.2016**
(21) Anmeldenummer: 09782031.0
(22) Anmeldetag: 20.08.2009
(51) Int. Cl.: H02B 13/02, H01H 31/00, H01H 33/12

(54) **SCHALTERMODUL FÜR EINE LUFTISOLIERTE MITTELSPANNUNGSSCHALTANLAGE UND LUFTISOLIERTE MITTELSPANNUNGSSCHALTANLAGE**
SWITCH MODULE FOR AIR INSULATED MEDIUM-VOLTAGE SWITCHGEAR AND AIR INSULATED MEDIUM-VOLTAGE SWITCHGEAR
MODULE DE COMMUTATION POUR UN APPAREILLAGE DE COMMUTATION DE MOYENNE TENSION ISOLÉ À L'AIR ET APPAREILLAGE DE COMMUTATION DE MOYENNE TENSION ISOLÉ À L'AIR

(43) Veröffentlichungstag der Anmeldung: 27.06.2012
(73) Patentinhaber: Siemens Aktiengesellschaft, 80333 München (DE)
(72) Erfinder: DRECHSLER, Gerhard, 55118 Mainz (DE); RANE, Tushar Maruti, 91056 Erlangen (DE); GERSTNER, Matthias, 60599 Frankfurt am Main (DE)
(86) Internationale Anmeldenummer: PCT/EP2009/060773
(87) Internationale Veröffentlichungsnummer: WO 2011/020510

(56) Entgegenhaltungen:
- EP-A1- 0 459 593
- EP-A2- 1 538 650
- EP-A2- 1 921 646
- CN-Y- 2 817 141
- DE-A1-102007 045 486
- US-A1- 2005 219 804

## Beschreibung

Die Erfindung betrifft ein Schaltermodul für eine luftisolierte Mittelspannungsschaltanlage.

Aus dem landläufigen Stand der Technik bekannt sind Schaltermodule für Mittelspannungsschaltanlagen, bei denen beispielsweise ein Leistungsschalter zwischen verschiedenen Positionen auf einem Einschub verfahrbar in der Mittelspannungsschaltanlage angeordnet ist, wobei beim Verfahren des Leistungsschalters mit seinem Einschub durch die lösbaren Anschlusskontakte bzw. deren Trennung ein Trennschalter realisiert ist, so dass durch das Verfahren des Einschubs in eine Trennstellung eine Trennstrecke ausgebildet ist. Der Leistungsschalter ist dabei auf seinem Einschub montiert, der Trennschalter ist durch die lösbaren Anschlusskontakte des Leistungsschalters mit der Schaltanlage gebildet, und in der Schaltanlage ist weiterhin ein Erdungsschalter vorgesehen.

Aus der US 2005/219804 A1, der DE 102007045486 A1 und der EP 1 538 650 A1 sind Schaltmodule für metallgekapselte, gasisolierte Schaltanlagen bekannt. Die CN 2 817 141 sowie die EP 0 459 593 A1 offenbaren eine luftisolierte Schaltanlage.

Aufgabe der vorliegenden Erfindung ist es, ein Schaltermodul für eine Mittelspannungsschaltanlage auszubilden, welches einen kompakten und Platz sparenden Aufbau einer Mittelspannungsschaltanlage ermöglicht.

Erfindungsgemäß gelöst wird diese Aufgabe durch ein Schaltermodul für eine luftisolierte Mittelspannungsschaltanlage, welches Schaltermodul ein Gehäuse aufweist, wobei das Gehäuse über Befestigungsmittel für Halteelemente und Befestigungselemente von in dem Schaltermodul angeordneten Schaltgeräten verfügt, derart, dass das Gehäuse sowohl als Schottgehäuse als auch als Tragegehäuse für die Schaltgeräte ausgebildet ist, wobei die Befestigungsmittel durch an Montageöffnungen des Gehäuses vorgesehene umgebogene Ränder mit daran angeordneten Befestigungsvorrichtungen gebildet sind und wobei die Montageöffnungen mittels aufsetzbarer Bleche unter Ausbildung von Schottwänden verschließbar sind.

Ein derartiges Schaltermodul ist besonders vorteilhaft zum Aufbau einer kompakten und Platz sparenden Mittelspannungsschaltanlage, weil in dem Gehäuse einerseits die Schaltgeräte angeordnet sind, so dass auf einem Raum greifenden Einschub verzichtet werden kann, und andererseits das Gehäuse des Schaltermoduls in der Schaltanlage sowohl eine Schottfunktion als Schottgehäuse aufweist, wodurch eine dielektrische Abschottung gegenüber anderen Schaltanlagenteilen ausgebildet ist, wie auch als Tragegehäuse für die in dem Schaltermodul angeordneten Schaltgeräte dient, weil die Schaltgeräte mittels Halteelementen und Befestigungselementen an Befestigungsmitteln des Gehäuses selbst direkt befestigt sind.

Die umgebogenen Ränder an Montageöffnungen des Gehäuses bilden eine einfache und wirkungsvolle Möglichkeit zur Befestigung von Halteelementen und Befestigungselementen der Schaltgeräte, wobei die an den umgebogenen Rändern angeordneten Befestigungsvorrichtungen beispielsweise Verschraubungsmöglichkeiten oder Öffnungen zum Vernieten sein können.

Durch die aufsetzbaren Bleche werden in einfacher Weise Schottwände ausgebildet, so dass das montierte Schaltermodul gegenüber anderen Bauteilen der Mittelspannungsschaltanlage abgeschottet ist.

In einer vorteilhaften Ausgestaltung der Erfindung umfassen die Schaltgeräte einen Leistungs- und Lasttrennschalter, einen Trennschalter und einen Erdungsschalter. Eine derartige Anordnung von Leistungs- oder Lasttrennschalter, Trennschalter und Erdungsschalter in einem Schaltermodul führt in vorteilhafter Weise zu einem kompakten Aufbau der Schaltanlage.

Die Erfindung betrifft weiterhin eine luftisolierte Mittelspannungsschaltanlage mit einem Schaltermodul nach einer der obigen Ausführungsformen, wobei die Mittelspannungsschaltanlage über weitere Module verfügt, deren Modulgehäuse jeweils als Schottgehäuse und als Tragegehäuse für in dem jeweiligen Modul angeordnete Baugruppen ausgebildet sind.

In weiterer vorteilhafter Ausgestaltung verfügen die Modulgehäuse der weiteren Module und des Schaltermoduls über Durchgangsöffnungen derart, dass die Module untereinander elektrisch und/oder mechanisch verbindbar sind. Eine erfindungsgemäß ausgebildete Mittelspannungsschaltanlage mit einem erfindungsgemäßen Schaltermodul weist einen kompakten und Platz sparenden Aufbau auf, weil die Schaltgeräte alle in dem Schaltermodul angeordnet sind und weitere Module über Durchgangsöffnungen zwischen den einzelnen Modulen miteinander verbindbar sind, so dass die Schaltanlage insgesamt einen modularen Aufbau mit kompakten einzelnen Modulen aufweist.

Die Erfindung wird im Folgenden anhand der Zeichnung und eines Ausführungsbeispiels mit Bezug auf die beiliegenden Figuren näher erläutert. Es zeigen:
- Figur 1: eine perspektivische Ansicht eines erfindungsgemäßen Schaltermoduls;
- Figur 2: eine Querschnittansicht durch ein erfindungsgemäßes Schaltermodul;
- Figur 3: eine perspektivische Ansicht eines Gehäuses des erfindungsgemäßen Schaltermoduls; und
- Figur 4: eine perspektivische Ansicht einer erfindungsgemäßen Mittelspannungsschaltanlage.

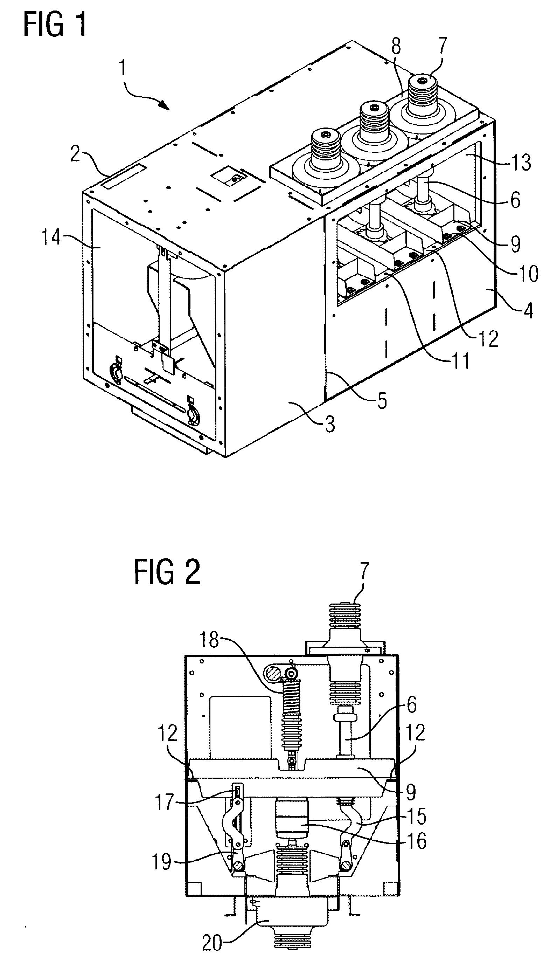

Figur 1 zeigt ein Ausführungsbeispiel eines Schaltermoduls 1 für eine dreiphasige Mittelspannungsschaltanlage, wobei mit Bezug auf die Figuren im Folgenden jeweils nur eine Phase der Schaltanlage bzw. des Schaltermoduls beschrieben wird, mit einem Gehäuse 2, welches einen Antriebsraum 3 und einen Schalterraum 4 umfasst, welche mittels einer Schottwand 5 voneinander abgeschottet und getrennt sind. Im Schalterraum 4 angeordnet sind Schaltgeräte, von denen in der Figur 1 figürlich dargestellt lediglich ein Trennschalter 6 erkennbar ist, welcher mit einem figürlich nicht dargestellten Leistungsschalter und einem figürlich ebenfalls nicht dargestellten Erdungsschalter zum Ausführen der für die Mittelspannungsschaltanlage vorgesehenen Schaltfunktionen dient. Der Trennschalter 6 ist mit Sammelschienenanschlüssen 7 verbunden, welche an einer Durchgangsöffnung 8 des Gehäuses 2 angeordnet und gehalten sind. Ein Halteelement 9 zur Halterung des Trennschalters 6 und der weiteren Schaltgeräte ist mittels Befestigungselementen 10 an Befestigungsmitteln 11 eines umgebogenen Randes 12 einer Montageöffnung 13 zur Schaltermontage befestigt. Der Antriebsraum 3 weist eine Montageöffnung 14 zur Antriebsmontage der Antriebe für die Schaltgeräte des Schaltermoduls 1 auf, welche wie auch die Montageöffnung 13 zur Schaltermontage mittels figürlich nicht dargestellter aufsetzbarer Bleche verschließbar ist, so dass bei aufgesetzten Blechen die Montageöffnung 13 und die Montageöffnung 14 verschlossen sind unter Ausbildung von Schottwänden. Aus dem Antriebsraum 3 durch die Schottwand 5 hindurch erstrecken sich mechanische Verbindungsmittel, beispielsweise Antriebswellen, welche Antriebsbewegungen der Antriebe aus dem Antriebsraum 3 in die Schaltgeräte des Schaltermoduls im Schalterraum 4 übertragen.

Figur 2 zeigt eine Querschnittansicht durch den Schalterraum 4 aus Figur 1, wobei in der Figur 2 neben dem Trennschalter 6 mit seinem Trennschalterantrieb 15 ein Leistungsschalter 16 und ein Erdungsschalter 17 mit ihren jeweiligen Antriebsstangen des Leistungsschalters 18 bzw. des Erdungsschalters 19 dargestellt sind, wobei Trennschalter 6, Leistungsschalter 16 und Erdungsschalter 17 an dem Halteelement 9, welches als sich quer durch den Schalterraum 4 erstreckende Traverse ausgebildet ist, befestigt sind. Das Halteelement 9 ist an umgebogenen Rändern 12 der Montageöffnung 13 zur Schaltermontage des Schalterraumes 4 mittels Befestigungselementen und Befestigungsmitteln beispielsweise in Form von Verschraubungen befestigt. Der Trennschalter 6, der Leistungsschalter 16 und der Erdungsschalter 17 sind entlang des Halteelementes 9 mittels eines figürlich nicht dargestellten Strombandes elektrisch miteinander verbunden, so dass bei geöffnetem Erdungsschalter 17 ein Strompfad über das Schaltermodul ausgebildet wird über den Sammelschienenanschluss 7, den geschlossenen Trennschalter 6 und den Leistungsschalter 16 zum Kabelabgang 20, und bei geöffnetem Trennschalter 6 unter Ausbildung einer Trennstrecke bei geschlossenem Erdungsschalter 17 und geschlossenem Leistungsschalter 16 der Kabelabgang 20 und sich daran anschließende Bereiche der Mittelspannungsschaltanlage geerdet sind. Der Leistungsschalter 16 ist vorgesehen, um bei geöffnetem Erdungsschalter 17 und geschlossenem Trennschalter 6 beispielsweise einen Kurzschluss zu unterbrechen.

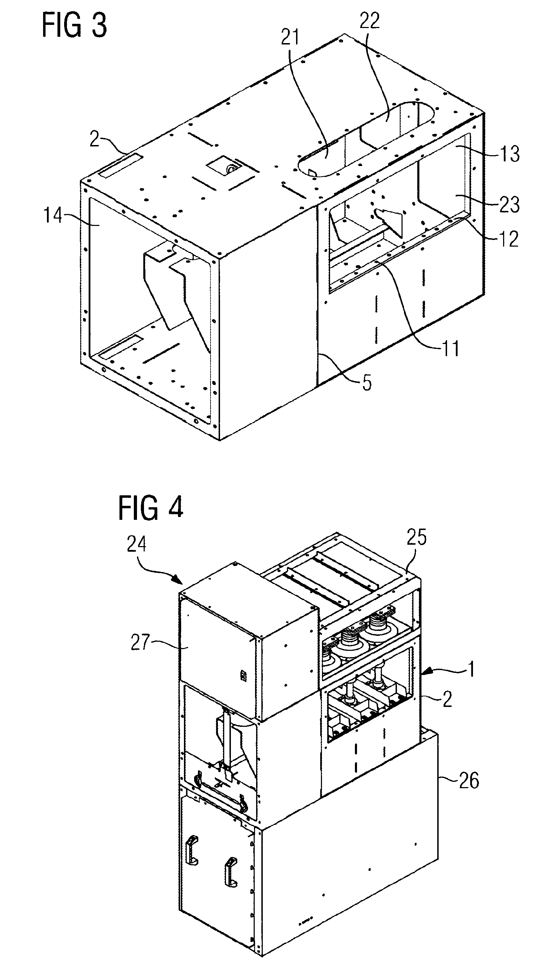

Figur 3 zeigt das Gehäuse 2 aus den Figuren 1 und 2 in einer perspektivischen Ansicht. Das Gehäuse 2 weist neben der Montageöffnung 14 für den Antriebsraum und der Montageöffnung 13 für die Schaltermontage eine Montageöffnung 21 für die Sammelschienenanschlüsse auf sowie Montageöffnungen 22 und 23 in der Rückwand auf, welche ebenfalls zur Schaltermontage vorgesehen sind sowie beispielsweise in der Montageöffnung 13 den umgebogenen Rand 12, an welchem Halteelemente an den Befestigungsmitteln 11 befestigt, beispielsweise verschraubt werden können. Das Gehäuse 2 des Schaltermoduls 1 weist somit nach Montage der Schaltgeräte und aufgesetzten Blechen sowohl eine Tragefunktion für die Schaltgeräte auf und ist somit als Tragegehäuse ausgebildet und weist ebenfalls eine Schottfunktion gegenüber anderen Schaltanlagenbauteilen auf und ist somit auch als Schottgehäuse ausgebildet.

Figur 4 zeigt eine Mittelspannungsschaltanlage 24 mit dem Schaltermodul 1 sowie einem Sammelschienenmodul 25, einem Kabelanschlussmodul 26 und einem Niederspannungsmodul 27, welche jeweils über figürlich nicht dargestellte Durchgangsöffnungen miteinander verbunden sind, um die einzelnen Module elektrisch und/oder mechanisch miteinander zu verbinden. Jedes der Module 25, 26 und 27 weist dabei ein eigenes Gehäuse auf, von denen jedes sowohl als Schottgehäuse wie auch als Tragegehäuse für die in dem jeweiligen Modul angeordneten Baugruppen ausgebildet ist.

### Bezugszeichenliste

- 1: Schaltermodul
- 2: Gehäuse
- 3: Antriebsraum
- 4: Schalterraum
- 5: Schottwand
- 6: Trennschalter
- 7: Sammelschienenanschluss
- 8: Durchgangsöffnung
- 9: Halteelement
- 10: Befestigungselement
- 11: Befestigungsmittel
- 12: umgebogener Rand
- 13: Montageöffnung Schaltermontage
- 14: Montageöffnung Antriebsmontage
- 15: Trennschalterantrieb
- 16: Leistungsschalter
- 17: Erdungsschalter
- 18: Antriebsstangen Leistungsschalter
- 19: Antriebsstangen Erdungsschalter
- 20: Kabelabgang
- 21: Montageöffnung Sammelschienenanschlüsse
- 22, 23: Montageöffnungen
- 24: Mittelspannungsschaltanlage
- 25: Sammelschienenmodule
- 26: Kabelanschlussmodul
- 27: Niederspannungsmodul

## Patentansprüche

1. Schaltermodul (1) für eine luftisolierte Mittelspannungsschaltanlage (24), welches Schaltermodul (1) ein Gehäuse (2) aufweist, wobei das Gehäuse (2) über Befestigungsmittel (11) für Halteelemente (9) und Befestigungselemente (10) von in dem Schaltermodul (1) angeordneten Schaltgeräten verfügt, derart, dass das Gehäuse (2) sowohl als Schottgehäuse als auch als Tragegehäuse für die Schaltgeräte ausgebildet ist, wobei die Befestigungsmittel (11) durch an Montageöffnungen (13, 14, 21, 22, 23) des Gehäuses (2) vorgesehene umgebogene Ränder mit daran angeordneten Befestigungsvorrichtungen gebildet sind, wobei die Montageöffnungen (13, 14, 21, 22, 23) mittels aufsetzbarer Bleche unter Ausbildung von Schottwänden verschließbar sind.

2. Schaltermodul nach Anspruch 1,
**dadurch gekennzeichnet, dass** die Schaltgeräte einen Leistungs- oder Lasttrennschalter (16), einen Trennschalter (6) und einen Erdungsschalter (17) umfassen.

3. Luftisolierte Mittelspannungsschaltanlage (24) mit einem Schaltermodul (1) nach einem der Ansprüche 1 oder 2, wobei die Mittelspannungsschaltanlage (24) über weitere Module (25, 26, 27) verfügt, deren Modulgehäuse jeweils als Schottgehäuse und als Tragegehäuse für in dem jeweiligen Modul angeordnete Baugruppen ausgebildet sind.

4. Luftisolierte Mittelspannungsschaltanlage nach Anspruch 3, **dadurch gekennzeichnet, dass** die Modulgehäuse der weiteren Module (25, 26, 27) und des Schaltermoduls über Durchgangsöffnungen derart verfügen, dass die Module untereinander elektrisch und/oder mechanisch verbindbar sind.

## Claims

1. Switch module (1) for an air-insulated medium-voltage switchgear assembly (24), which switch module (1) has a housing (2), the housing (2) having fastening means (11) for retaining elements (9) and fastening elements (10) of switching devices arranged in the switch module (1), such that the housing (2) is in the form of both a partition housing and a support housing for the switching devices, wherein the fastening means (11) are formed by bent edges provided at fitting openings (13, 14, 21, 22, 23) in the housing (2) and having fastening apparatuses arranged on said edges, wherein the fitting openings (13, 14, 21, 22, 23) can be closed by means of positionable plates so as to form partitions.

2. Switch module according to Claim 1,
**characterized in that**
the switching devices comprise a circuit breaker or load breaker (16), a switch disconnector (6) and a grounding switch (17).

3. Air-insulated medium-voltage switchgear assembly (24) with a switch module (1) according to one of Claims 1 and 2, wherein the medium-voltage switchgear assembly (24) has further modules (25, 26, 27), whose module housings are each in the form of partition housings and support housings for assemblies arranged in the respective module.

4. Air-insulated medium-voltage switchgear assembly according to Claim 3,
**characterized in that**
the module housings of the further modules (25, 26, 27) and of the switch module have through-openings such that the modules can be electrically and/or mechanically connected to one another.

## Revendications

1. Module ( 1 ) de commutation pour une installation ( 24 ) de distribution en moyenne tension à isolation par de l'air, lequel module ( 1 ) de commutation a un boîtier ( 2 ), le boîtier disposant de moyens ( 11 ) de fixation d'éléments ( 9 ) de maintien et d'éléments ( 10 ) de fixation d'appareil de commutation disposés dans le module ( 1 ) de commutation, de manière à ce que le boîtier ( 1 ) soit constitué à la fois comme boîtier à cloison et comme boîtier support des appareils de commutation, les moyens ( 11 ) de fixation étant formés par des bords recourbés, prévus sur des ouvertures ( 13, 14, 21, 22, 23 ) de montage du boîtier ( 2 ) et ayant des dispositifs de fixation qui y sont montés, les ouvertures ( 13, 14, 21, 22, 23 ) de montage pouvant être, avec formation de parois de cloisonnement, fermées au moyen de tôles, qui peuvent être y être mises.

2. Module de commutation suivant la revendication 1, **caractérisé en ce que** les appareils de commutation comprennent un disjoncteur ( 16 ) ou un sectionneur en charge, un sectionneur ( 6 ) et un interrupteur de mise à la terre ( 17 ) .

3. Installation ( 24 ) de distribution en moyenne tension à isolation par de l'air comprenant un module ( 1 ) de commutation suivant l'une des revendications 1 ou 2, l'installation ( 24 ) de distribution en moyenne tension disposant d'autres modules ( 25, 26, 27 ) dont les boîtiers sont constitués respectivement comme boîtier de cloisonnement et comme boîtier de support des ensembles disposés dans le module respectif.

4. Installation de distribution en moyenne tension suivant la revendication 3, **caractérisé en ce que** les boîtiers des autres modules ( 25, 26, 27 ) et du module de commutation disposent d'ouvertures traversantes de manière à pouvoir relier électriquement et/ou mécaniquement les modules entre eux.
